## Europäisches Patentamt
## European Patent Office
## Office européen des brevets

(19)

(11) Veröffentlichungsnummer: **0 115 618**
**B1**

(12) # EUROPÄISCHE PATENTSCHRIFT

(45) Veröffentlichungstag der Patentschrift:
20.05.87

(51) Int. Cl.⁴: **H 04 B 1/56,** H 04 B 1/46

(21) Anmeldenummer: 83112939.0

(22) Anmeldetag: 22.12.83

(54) Verfahren zur digitalen Sprachübertragung über einen einzigen Funkkanal.

(30) Priorität: 18.01.83 DE 3301351

(43) Veröffentlichungstag der Anmeldung:
15.06.84 Patentblatt 84/33

(45) Bekanntmachung des Hinweises auf die Patenterteilung:
20.05.87 Patentblatt 87/21

(84) Benannte Vertragsstaaten:
AT CH DE FR GB IT LI

(56) Entgegenhaltungen:
EP-A-0 018 256
DE-A-1 766 215
FR-A-2 239 824
US-A-3 942 116
US-A-4 145 657

(73) Patentinhaber: Licentia Patent- Verwaltungs- GmbH,
Theodor- Stern- Kai 1, D-6000 Frankfurt/Main 70
(DE)

(72) Erfinder: Fischer, Karl, Dipl.- Ing., Wiblinger Steig
29, D-7910 Neu- Ulm (DE)
Erfinder: Schaller, Wolfgang, Dr.- Ing., Am Roten
Berg 51, D-7900 Ulm (DE)

(74) Vertreter: Schulze, Harald Rudolf, Dipl.- Ing.,
Licentia Patent- Verwaltungs- GmbH Theodor-
Stern- Kai 1, D-6000 Frankfurt/Main 70 (DE)

LIBER, STOCKHOLM 1987

EP 0 115 618 B1

## Beschreibung

Die Erfindung betrifft ein Verfahren nach dem Oberbegriff des Anspruches 1. Beim Simplex-Funkbetrieb auf einem einzigen Funkkanal zwischen zwei Teilnehmern A und B ist eine strenge Sprechdisziplin einzuhalten. Dem empfangenden Teilnehmer ist es nicht möglich einzusprechen. Beim Duplexbetrieb im Frequenzmultiplex werden zwei Funkkanäle benötigt und eine aufwendige Frequenzweiche.

Bei der digitalisierten Sprechfunktechnik ist die Anwendung des Zeitduplex bereits bekannt. Dabei werden kurze Datenblöcke von beiden Teilnehmern synchronisiert gesendet, so daß es sich in bezug auf die Funkgeräte um einen schnellen Simplexbetrieb handelt. Die Übertragungsgeschwindigkeit auf dem Frequenzkanal ist allerdings verdoppelt so daß bei symmetrischem Zeitduplex zwei (direkt nebeneinander liegerde) Kanäle belegt werden. Eine Frequenzweiche wird nicht benötigt.

Aus der US-A 41 45 657 ist ein Verfahren der eingangs genannten Art bekannt, bei dem zwei Teilnehmer auf einem einzigen Funkkanal korrespondieren. Die Übertragung erfolgt in Delta-Modulation. Diese wird in regelmäßigen Zeitabständen kurzzeitig komprimiert, um Zeitschlitze einzufügen, in denen Vermittlungsdaten übertragen werden können. Druckt ein gerade empfangender Teilnehmer eine Sprech(wunsch)taste, so wird im Zeitschlitz ein Signal übertragen, das den gerade sprechenden Teilnehmer zur Sprechrichtungsumschaltung veranlaßt.

Aus der US-A-39 42 116 ist ein sprachgesteuerter Sende-Empfanger für Duplex-Verbindungen bekannt. Die Sprachsteuerung dient einerseits zur Energieeinsparung beim Sender der nur eingeschaltet wird wenn ein Sprachsignal anliegt. Andererseits werden abgehende und ankommende Sprachamplituden verglichen um damit eine Anordnung zur Echounterdrückung im Empfangsweg umzuschalten.

Aufgabe der Erfindung ist es, ein Verfahren der eingangs genannten Art anzugeben, bei dem es dem empfangenden Teilnehmer möglich ist jederzeit einzusprechen.

Die Erfindung ist im Patentanspruch 1 gekennzeichnet. Die weiteren Ansprüche beinhalten vorteilhafte Weiterbildungen bzw. Ausführungen der Erfindung.

Die Erfindung wird im folgenden anhand der Figuren näher erläutert. Sie geht aus von einer FM/PM-Funkübertragung unterhalb 1 GHz bei üblichem Kanalabstand.

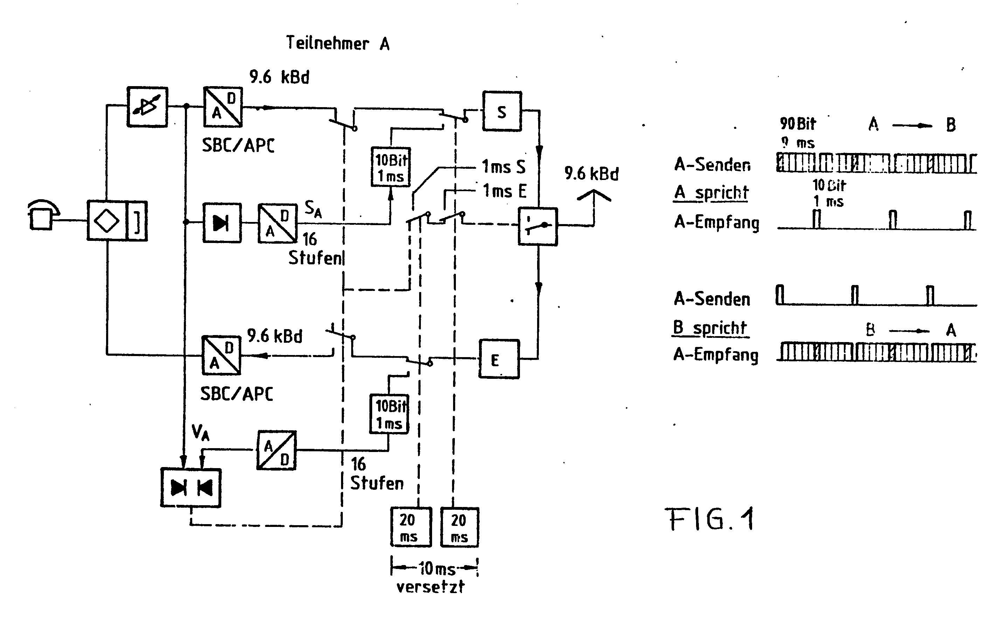

FIG. 1 zeigt ein Blockschaltbild eines Simplex-Funkgeräts für die Durchführung einer vorteilhaften Ausführung des erfindungsgemäßen Verfahrens. Die Sprachdigitalisierung erfolgt nach dem an sich bekannten Subband Coding-(SBC) oder Adaptive Predictive Coding-Verfahren (APC) bei 9,6 kBd. Bei den Funkgeräten ist stets der Sende- oder Empfangszug durchgeschaltet. Eine Umschaltung der Sprechrichtung erfolgt durch Vergleich der Sprachamplituden in beiden beteiligten Funkgeräten. Spricht keiner der Teilnehmer A und B, so bleibt der zuletzt erreichte Schaltzustand erhalten.

Bei beiden Funkgeräten wird parallel zur Sprachdigitalisierung die eigene Sprachamplitude ermittelt und zum einen einem Vergleicher ($V_A$) zugeführt, zum anderen in 16 Stufen digitalisiert ($S_A$). Beim sendenden Funkgerät wird periodisch alle 20 msec die digitalisierte Sprachamplitude für 1 msec in den Bitstrom eingefügt (vgl. die schraffierten Blöcke in der ersten Zeile des Datendiagramms in FIG. 1). Dabei stehen 10 Bit zur Verfugung, 4 für die 16-stufige Amplitudeninformation und 6 für Kennzeichnung und Synchronisation.

Synchron wird im empfangenden Funkgerät diese Information aus dem Bitstrom ausgeblendet, gewandelt und dem Vergleicher zugeführt. Zeigt dieser an, daß die empfangene Sprachamplitude niedriger ist als die eigene (des empfangenden Funkgeräts), so wird die Sprechrichtung umgeschaltet.

Zu dieser Übertragung um 10 msec versetzt wird ebenfalls periodisch alle 20 msec beim empfangenden Funkgerät der Sender S und synchron beim sendenden funkgerät der Empfänger E eingeschaltet und für 1 msec die digitalisierte Sprachamplitude des empfangenden Funkgeräts übertragen. Diese wird im sendenden Funkgerat gewandelt und dem Veigleicher $V_A$ zugeführt (vgl. auch die zweite Zeile des Datendiagramms in FIG. 1). Zeigt der Vergleicher an, daß die empfangene Sprachamplitude höher ist als die eigene (des sendenden Funkgeräts), so wird die Sprechrichtung umgeschaltet.

Beim erfindungsgemäßen Verfahren kann der hörende Teilnehmer jederzeit einsprechen. Die Vergleicher in den beiden Funkgeräten reagieren mit einem Zeitunterschied von 10 msec. wenn die Sprachamplitude des hörenden Teilnehmers höher ist als die des gerade sendenden, so daß in beiden Funkgeräten praktisch gleichzeitig automatisch die Sprechrichtung umgeschaltet wird.

Das vorstehend beschriebene Verfahren soll im folgenden als "Differentail-Zeitduplex" bezeichnet werden.

In erfinderischer Weiterbildung des Verfahrens schalten beide Funkgeräte vor Differertial-Zeitduplex auf den symmetrischer Zeitduplex um, wenn die Vergleicher fest stellen, daß beide Teilnehmer gleichzeitig sprechen.

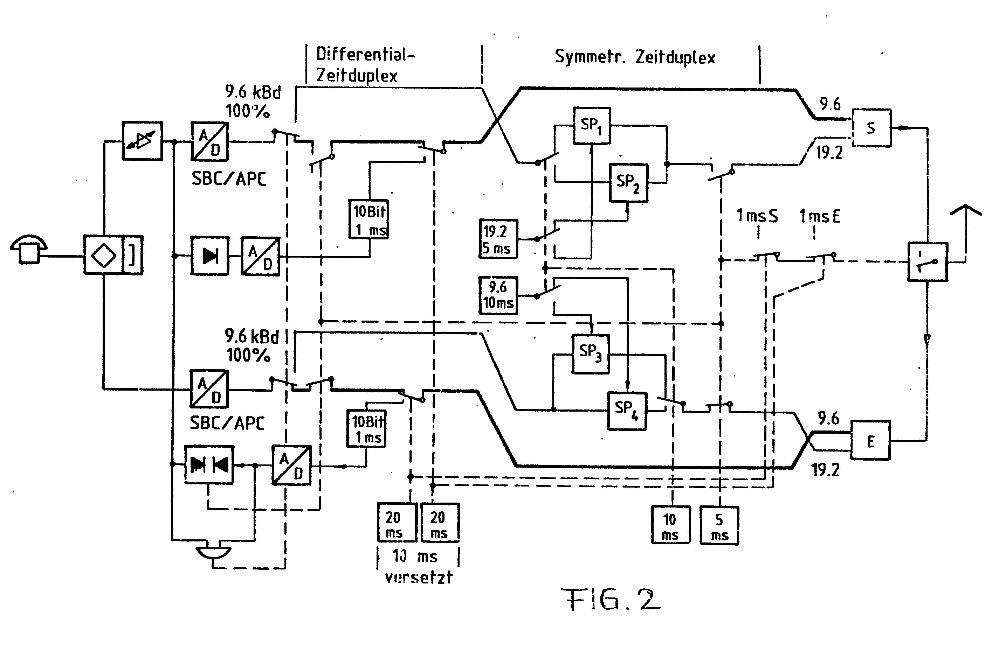

FIG. 2 zeigt ein Blockschaltbild für die Durchführung des weitergebildeten erfindungsgemäßen Verfahrens. Der linke Teil der Anordnung entspricht vollständig der Anordnung gemäß FIG. 1. Solange beide Teilnehmer abwechselnd sprechen, wird nach dem Differential-Zeitduplex verfahren. Stellen die Und-Schaltungen der Vergleicher fest, daß beide gleichzeitig sprechen, so wird zwischen A/D-Wandlung und Sender S bzw. Empfänger E und D/A-Wandlung der rechte Teil der Anordnung mit den Speichern SP₁ bis SP₄ eingeschaltet. In an sich bekannter Weise wird zum Senden der Bitstrom mit 9,6 kBd abwechselnd in die Speicher SP₁ bzw. SP₂ eingelesen und mit doppelter Geschwindigkeit bei 19,2 kBd ausgelesen. Der Empfang läuft sinngemäß umgekehrt ab.

Wird die Modulationsart (vorzugsweise eine 2-stufige FSK) beibehalten, so wird während des Betriebs im symmetrischen Zeitduplex auf dem Funkkanal die doppelte Bandbreite belegt. Da dies aber während weniger als 10 % der Zeit der Fall sein wird, kann die kurzfristige Bandüberschreitung in Kauf genommen werden.

Gemäß einer Weiterbildung der Erfindung wird eine Bandüberschreitung dadurch vermieden, daß beim Betrieb im symmetrischen Zeitduplex die Modulationsart auf die doppelte Anzahl von Stufen verändert wird.

Im Ausführungsbeispiel der FIG. 2 wird z. B. der mit 19,2 kBd am Sender S anstehende zweiwertige Bitstrom in zwei Kanäle aufgespalten, die dann gleichzeitig mit einer 4-stufigen FSK bei 9,6 kBd über den Funkkanal übertragen werden. Durch diese Umkodierung wird also mit der gleichen Schrittgesehwindigkeit wie beim einfachen Simplexbetrleb die digitalisierte Sprache doppelt so schnell übertragen. Die 4-stufige Modulation bringt allerdings gegenüber der 2-stufigen einen geringeren Störabstand und damit höhere Bitfehlerzahl mit sich.

In einer alternativen Ausführung der Weiterbildung der Erfindung wird während des Betriebs im symmetrischen Zeitduplex die Datenrate der Sprachdigitalisierung auf die Hälfte reduziert, also kurzzeitig eine Verschlechterung der Sprachqualität in Kauf genommen. In FIG. 2 bedeutet dies, daß die Wandlung (SBC/APC) bei 4,8 kBd stattfindet und mit 9,6 kBd übertragen wird, wobei die Modulationsart beibehalten wird. Eine Bandüberschreitung findet auch in diesem Fall nicht statt.

**Patentansprüche**

1. Verfahren zur digitalen Sprachübertragung über einen einzigen Funkkanal zwischen zwei Teilnehmern A und B mit je einem Simplex-Funkgerät, bei dem stets entweder der Sende- oder der Empfangszug durchgeschaltet ist, wobei die gerade sendende Station ihre Aussendung in regelmäßigen Zeitabständen kurzzeitig unterbricht und den Empfangsweg durchschaltet um festzustellen, ob die Gegenstation zu sprechen beabsichtigt, gekennzeichnet durch folgende Merkmale:
- Bei beiden Funkgeräten wird parallel zur Umwandlung der Sprache in einen Bitstrom die eigene Sprachamplitude ermittelt und zum einen digitalisiert, zum anderen einem Vergleicher zugeführt.
- Beim sendenden Funkgerät wird periodisch die digitalisierte Sprachamplitude in den auszusendenden Bitstrom eingefügt, beim empfangenden Funkgerät ausgeblendet, gewandelt und dem Vergleicher zugeführt; ist die empfangene Sprachamplitude am Vergleicher niedriger als die eigene Sprachamplitude des empfangenden Funkgeräts, so wird die Sprechrichtung umgeschaltet.
- Beim empfangenden Funkgerät wird um eine geeignete Zeitspanne verschoben mit der gleichen Periodizität kurzzeitig der Sender eingeschaltet und die digitalisierte Sprachamplitude ausgesendet, beim sendenden Funkgerät mit dem synchron kurzzeitig eingeschalteten Empfänger empfangen, gewandelt und dem Vergleicher zugeführt; ist die empfangene Sprachamplitude am Vergleicher höher als die eigene Sprachamplitude des sendenden Funkgeräts, so wird die Sprechrichtung umgeschaltet.

2. Verfahren nach Anspruch 1, dadurch gekennzeichnet, daß beide Funkgeräte auf symmetrischen Zeitduplex umgeschaltet werden, wenn die Vergleicher feststellen, daß beide Teilnehmer gleichzeitig sprechen.

3. Verfahren nach Anspruch 2, dadurch gekennzeichnet, daß die Modulationsart der Funkübertragung auf die doppelte Anzahl von Stufen erhöht wird, wenn beide Teilnehmer gleichzeitig sprechen.

4. Verfahren nach Anspruch 2, dadurch gekennzeichnet, daß die Datenrate der Sprachdigitalisierung auf die Hälfte reduziert wird, wenn beide Teilnehmer gleichzeitig sprechen.

5. Verfahren nach Anspruch 1, dadurch gekennzeichnet, daß die Sprachdigitalisierung nach dem an sich bekannten Subband Coding- oder Adaptive Predictive Coding-verfahren bei 9,6 kBd durchgeführt wird.

6. Verfahren nach Anspruch 1 und 5, dadurch gekennzeichnet, daß die Aussendung der digitalisierten Sprachamplitude alle 20 msec für die Dauer von 1 msec erfolgt und daß die Aussendung bei den beiden Funkgeräten um 10 msec gegeneinander versetzt ist.

7. Verfahren nach Anspruch 1, dadurch gekennzeiehnet, daß die Sprachamplitude in 16 Stufen digitalisiert wird.

**Claims**

1. Method for the digital transmission of speech by way of a single radio channel between two subscribers A and B each with a respective simplex radio set, in which always either the sending section or the receiving section is switched through, wherein the station just sending briefly interrupts its emission at regular time intervals and switches through the receiving path in order to ascertain whether the counter- station intends to speak, characterised by the following features:

- In both radio sets, the own speech amplitude is determined in parallel to the conversion of the speech into a bit current and digitalised on the one hand and conducted to a comparator on the other hand.

- In the sending radio set, the digitalised speech amplitude is periodically inserted into the bit current to be emitted and in the receiving radio set filtered out, converted and conducted to the comparator; if the received speech amplitude at the comparator is lower than the own speech amplitude of the receiving radio set, then the speech direction is switched over.

- In the receiving radio set, the transmitter is switched on briefly at the same periodicity, but displaced by a suitable time span, and the digitalised speech amplitude is emitted and received in the sending radio set by the receiver briefly switched on in synchronism, converted and conducted to the comparator; if the received speech amplitude at the comparator is higher than the own speech amplitude of the sending radio set, then the speech direction is switched over.

2. Method according to claim 1, characterised thereby, that both radio sets are switched over to symmetrical time duplex when the comparators ascertain that both subscribers speak at the same time.

3. Method according to claim 2, characterised thereby, that the manner of modulation of the radio transmission is increased to twice the number of steps when both subscribers speak at the same time.

4. Method according to claim 2, characterised thereby, that the data rate of the speech digitalisation is reduced to half when both subscribers speak at the same time.

5. Method according to claim 1, characterised thereby, that the speech digitalisation is performed at 9.6 kilobauds by the in itself known subband coding method or the adaptive predictive coding method.

6. Method according to claim 1 and 5, characterised thereby, that the emission of the digitalised speech amplitude takes place every 20 milliseconds for a duration of 1 millisecond and that the emission in both the radio sets is displaced one relative to the other by 10 milliseconds.

7. Method according to claim 1, characterised thereby, that the speech amplitude is digitalised in 16 steps.

## Revendications

1. Procédé de transmission numérique de la parole sur un canal radio unique entre deux abonnés A et B équipés chacun d'un radiotéléphone simplex dans lequel le circuit d'émission ou le circuit de réception est toujours connecté, le poste en cours d'émission interrompant brièvement son émission à intervalles réguliers et connectant le circuit de réception pour déterminer si le poste correspondant envisage de parler, ledit procédé étant caractérisé en ce que:

- dans les deux radiotéléphones et parallèlement à la conversion de la parole en un flux de bits, l'amplitude vocale locale est déterminée puis d'une part numérisée et d'autre part appliquée à un comparateur;

- l'amplitude vocale numérisée est périodiquement insérée dans le flux de bits à émettre par le radiotéléphone émetteur puis, dans le radiotéléphone récepteur, extraite, convertie et appliquée au comparateur; le sens de la conversation est inversée quand l'amplitude vocale reçue sur le récepteur est inférieure à l'amplitude vocale propre du radiotéléphone récepteur; et

- dans le radiotéléphone récepteur, l'émetteur est branché brièvement avec la même périodicité et un décalage temporel approprié, puis, dans le radiotéléphone récepteur, reçue par le récepteur branché brièvement au synchronisme, convertie et appliquée au comparateur; le sens de la conversation est inversé quand l'amplitude vocale reçue sur le comparateur est supérieure à l'amplitude vocale propre du radiotéléphone émetteur.

2. Procédé selon revendication 1, caractérisé en ce que les deux radiotéléphones sont commutés sur duplex temporel symétrique quand les comparateurs constatent que les deux abonnés parlent simultanément.

3. Procédé selon revendication 2, caractérisé en ce que le nombre d'échelons de la modulation de la transmission radio est doublé quand les deux abonnés parlent simultanément.

4. Procédé selon revendication 2, caractérisé en ce que le débit binaire de la numérisation de la parole est réduit de moitié quand les deux abonnés parlent simultanément.

5. Procédé selon revendication 1, caractérisé en ce que la numérisation de la parole s'effectue selon le procédé connu de codage à sous-bande ou de codage prédictif adaptatif à 9,6 kBd.

6. Procédé selon revendications 1 et 5, caractérisé en ce que l'émission de l'amplitude vocale numérisée s'effectue toutes les 20 ms et pendant 1 ms; et l'émission des deux radiotéléphones est décalée de 10 ms.

7. Procédé selon revendication 1, caractérisé en ce que l'amplitude vocale est numérisée en 16 échelons.

Teilnehmer A

9.6 kBd

SBC/APC

10Bit 1ms

1ms S
1ms E

9.6 kBd

S_A

16 Stufen

S

9.6 kBd

SBC/APC

10Bit 1ms

E

V_A

A/D

16 Stufen

| 20 ms | 20 ms |

|←10ms→|
versetzt

90 Bit    A ──→ B
9 ms
A-Senden

A spricht
10 Bit
1 ms
A-Empfang

A-Senden

B spricht          B ──→ A
A-Empfang

FIG. 1

FIG. 2